# EUROPEAN PATENT APPLICATION

(11) **EP 4 746 538 A1**
(43) Date of publication of application: **20.05.2026**
(21) Application number: 25207727.6
(22) Date of filing: 09.10.2025
(51) Int. Cl.: H04W 52/02, H04W 24/10, H04W 88/06

(54) **LOW POWER WAKE-UP SIGNAL RADIO RESOURCE MANAGEMENT MEASUREMENT**

(30) Priority: 08.11.2024 US 202418942100
(71) Applicant: Nokia Technologies Oy, 02610 Espoo (FI)
(72) Inventor: HVIID, Jan Torst, 9270 Klarup (DK); NG, Man Hung, Swindon, SN25 2JS (GB); SETHI, Alok, 90590 Oulu (FI); KAINULAINEN, Jani-Pekka, Cambridge, CB24 8BA (GB); KINNUNEN, Pasi Eino Tapio, 90240 Oulu (FI); KOSKINEN, Jussi-Pekka, 90420 Oulu (FI)
(74) Representative: Bryers Intellectual Property Ltd

(57) **Abstract**

Embodiments of the present disclosure relate to low power wake-up signal (LP-WUS) radio resource management (RRM) measurement. In an aspect, a first apparatus may transfer, from a LR of the first apparatus to a MR of the first apparatus, a measurement report comprising results of multiple LP-WUS RRM measurements. The MR of the first apparatus 110 may transmit, to a second apparatus 120, the measurement report.

## Description

### FIELD

Various example embodiments relate to the field of communications, and in particular, to a device, method, apparatus and a computer readable storage medium associated with low power wake-up signal (LP-WUS) radio resource management (RRM) measurement.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by third generation partnership project (3GPP) or European telecommunications standards institute (ETSI). Examples of such standards include the so-called 5th generation (5G) standard, 6th generation (6G), or other standards promulgated by 3GPP.

### SUMMARY

In general, example embodiments of the present disclosure provide a solution for LP-WUS RRM measurement.

In a first aspect, there is provided a first apparatus. The first apparatus comprises at least one processor and at least one memory storing instructions that, when executed by the at least one processor, cause the first apparatus at least to transfer, from a low power radio (LR) of the first apparatus to a main radio (MR) of the first apparatus, a measurement report comprising results of multiple LP-WUS RRM measurements; and transmit, from the MR of the first apparatus to a second apparatus, the measurement report.

In a second aspect, there is provided a method implemented at a first apparatus. The method comprises transferring, from a LR of a first apparatus to a MR of the first apparatus, a measurement report comprising results of multiple LP-WUS RRM measurements; and transmitting, from the MR of the first apparatus to a second apparatus, the measurement report.

In a third aspect, there is provided an apparatus comprising means for transferring, from a LR of a first apparatus to a MR of the first apparatus, a measurement report comprising results of multiple LP-WUS RRM measurements; and means for transmitting, from the MR of the first apparatus to a second apparatus, the measurement report.

In a fourth aspect, there is provided a non-transitory computer readable medium comprising program instructions that, when executed by an apparatus, cause the apparatus to perform at least the method according to any one of the above third to fourth aspect.

In a fifth aspect, there is provided a computer program comprising program instructions for causing an apparatus to perform at least the method according to the above second aspect.

In a sixth aspect, there is provided a first apparatus comprising transferring circuitry configured to transfer, from a LR of a first apparatus to a MR of the first apparatus, a measurement report comprising results of multiple LP-WUS RRM measurements; and transmitting circuitry configured to transmit, from the MR of the first apparatus to a second apparatus, the measurement report.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
Fig. 1 illustrates an example communication network in which embodiments of the present disclosure may be implemented;
Fig. 2A to Fig. 2D illustrate examples of typical test setup according to some embodiments of the present disclosure;
Fig. 3 illustrates a flowchart illustrating a process for LP-WUS RRM measurement according to some embodiments of the present disclosure;
Fig. 4 illustrate an example of solution for the test loop mode implementation according to some embodiments of the present disclosure;
Fig. 5 illustrates a flowchart illustrating an example RRM performance test flow according to some embodiments of the present disclosure;
Fig. 6 illustrates a flowchart illustrating a process for LP-WUS RRM measurement according to some embodiments of the present disclosure;
Fig. 7 illustrate an example process of LP-WUS RRM measurement according to some embodiments of the present disclosure;
Fig. 8 illustrates a flowchart of a method implemented at a first apparatus according to some embodiments of the present disclosure;
Fig. 9 illustrates a flowchart of a method implemented at a second apparatus according to some embodiments of the present disclosure;
Fig. 10 illustrates a flowchart of a method implemented at a first apparatus according to some embodiments of the present disclosure;
Fig. 11 illustrates a simplified block diagram of an apparatus that is suitable for implementing embodiments of the present disclosure; and
Fig. 12 illustrates a block diagram of an example computer readable medium in accordance with some embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

As used herein, the term "terminal device" refers to any end device that may be capable of wireless communication. By way of example rather than limitation, a terminal device may also be referred to as a communication device, user equipment (UE), a subscriber station, a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

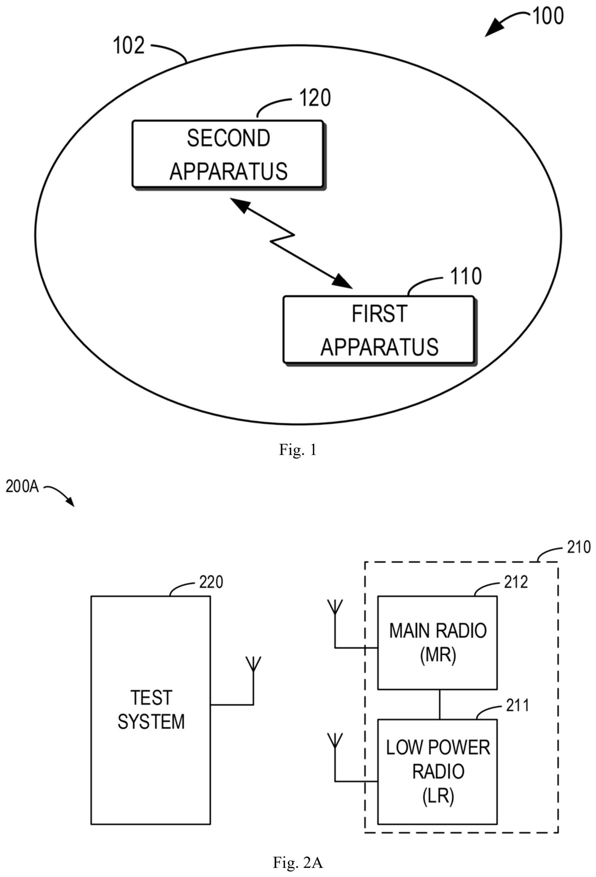

Principles and embodiments of the present disclosure will be described in detail below with reference to the accompanying drawings. Reference is first made to Fig. 1, which illustrates an example communication system 100 in which embodiments of the present disclosure may be implemented. As shown in Fig. 1, the communication network 100 may comprise a first apparatus 110, which may be, for example, a device under test (DUT) for simulating corresponding behaviors of a terminal device. In some example embodiments, the terminal device may also be discussed as a UE.

The communication network 100 may further comprise a second apparatus 120, which may be, for example, a test equipment (TE) for simulating corresponding behaviors of a network device. In some embodiments, the network device may be discussed as a BS, a gNB, or an eNB. In some embodiments, the TE may be discussed as a test system.

In the following, for the purpose of illustration, some embodiments are described with the first apparatus 110 operating as a device under test (DUT) and the second apparatus 120 operating as a test equipment (TE). However, in some example embodiments, operations described in connection with a terminal device may be implemented at a network device or other device, and operations described in connection with a network device may be implemented at a terminal device or other device.

In some embodiments, if the first apparatus 110 is a terminal device and second apparatus 120 is a network device, a link from the second apparatus 120 to the first apparatus 110 is referred to as a downlink (DL), while a link from the first apparatus 110 to the second apparatus 120 is referred to as an uplink (UL). In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is a RX apparatus (or a receiver).

It is to be understood that the number of network device and terminal devices is only for the purpose of illustration without suggesting any limitations. The system 100 may include any suitable number of the first apparatus 110 and the second apparatus 120 adapted for implementing embodiments of the present disclosure.

Communications in the communication system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: code division multiple access (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete fourier transform spread OFDM (DFT-s-OFDM) and/or any other technologies currently known or to be developed in the future.

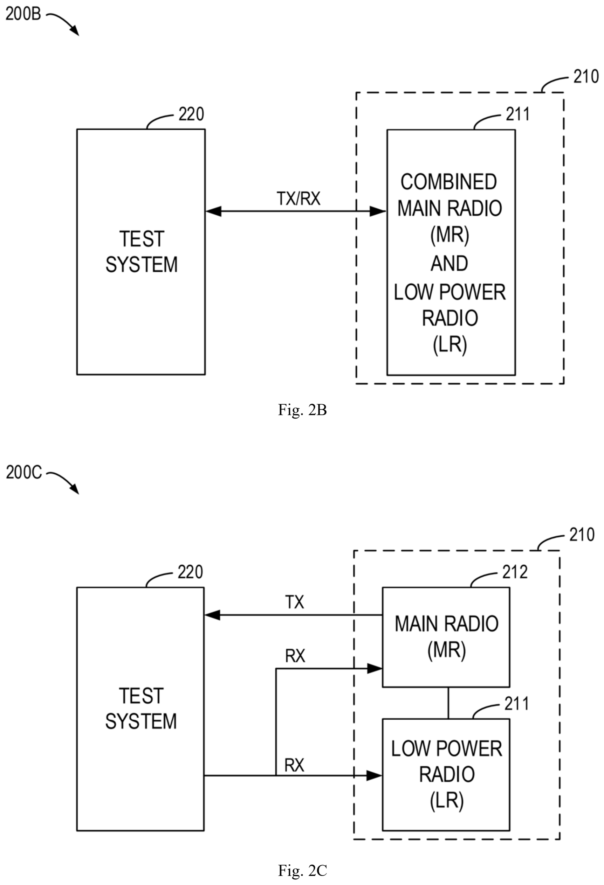

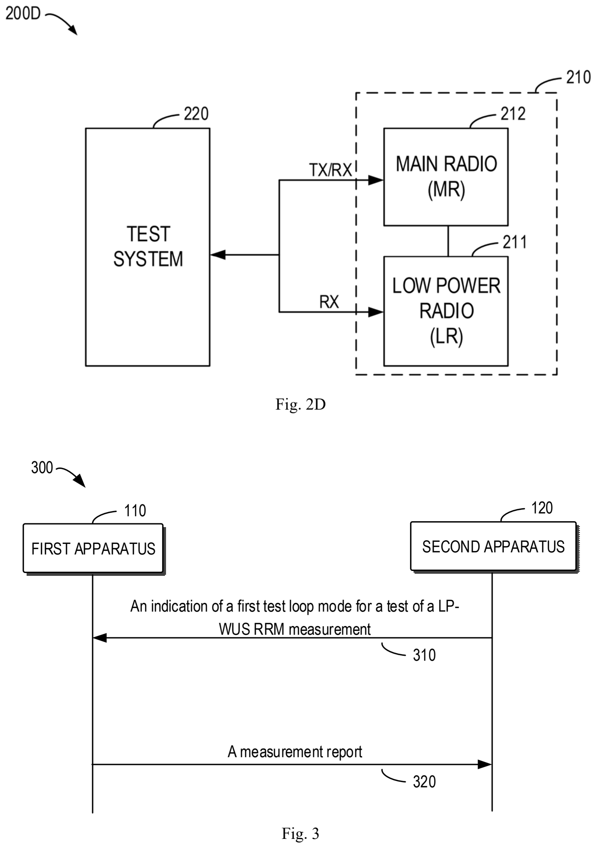

Fig. 2A shows a typical test setup 200A for frequency range 2 (FR2) radiated test setup. Fig. 2B, Fig 2C and Fig. 2D show typical test setups 200B, 200C and 200D for frequency range 1 (FR1) conducted test setup. As shown in Fig. 2A, Fig. 2C and Fig. 2D, a DUT 210 and a test system 220 are provided. The DUT 210 may be a lower power wake-up radio (LP-WUR) and includes a low power radio (LR) 211 and a main radio (MR) 212. The LP-WUR has separate antenna and/or separate antenna connector. As shown in Fig. 2B, a DUT 210 and a test system 220 are provided. The DUT 210 may be an LP-WUR and includes a combined MR and LR 211. The LP-WUR has fully reused antenna and frontend, and partly reused RF section. With this test setup, a test of a LP-WUS RRM measurement may be performed.

As described above, the LP-WUR may be a separate hardware (HW) instance of the UE and may be used in a radio resource control (RRC) idle mode, an RRC inactive mode and an RRC connected mode, performance validation may be a challenge especially for the RRC idle mode where no feedback to test system or is specified for any RRM measurements.

According to embodiments of the present disclosure, there is provided a solution for LP-WUS RRM measurement. In an aspect of the solution, the first apparatus may receive, from the second apparatus, an indication of a first test loop mode for a test of a LP-WUS RRM measurement. The first test loop mode may support an RRC connected mode, an RRC idle mode, and an RRC inactive mode. The first apparatus may transmit, to the second apparatus, a measurement report comprising results of multiple measurements. This solution may support all RRC modes for LP-WUS RRM measurement to improve flexibility.

Reference is now made to Fig. 3, which shows a process 300 for LP-WUS RRM measurement according to some embodiments of the present disclosure. For the purpose of discussion, the process 300 will be described with reference to Fig. 1. The process 300 may involve the first apparatus 110 and the second apparatus 120 as illustrated in Fig. 1.

At 310, the second apparatus 120 may transmit an indication of a first test loop mode for a test of a LP-WUS RRM measurement to the first apparatus 110. Accordingly, the first apparatus 110 may receive the indication. In some embodiments, the first test loop mode may support an RRC connected mode, an RRC idle mode, and an RRC inactive mode. It is to be understood that all three RRC modes are applicable for the embodiments of the present disclosure, while setup and configuration of the second apparatus 120 may deviate between the three RRC modes. An actual test case that defines the signaling and particular behavior of the MR and LR may be configured by the test case itself.

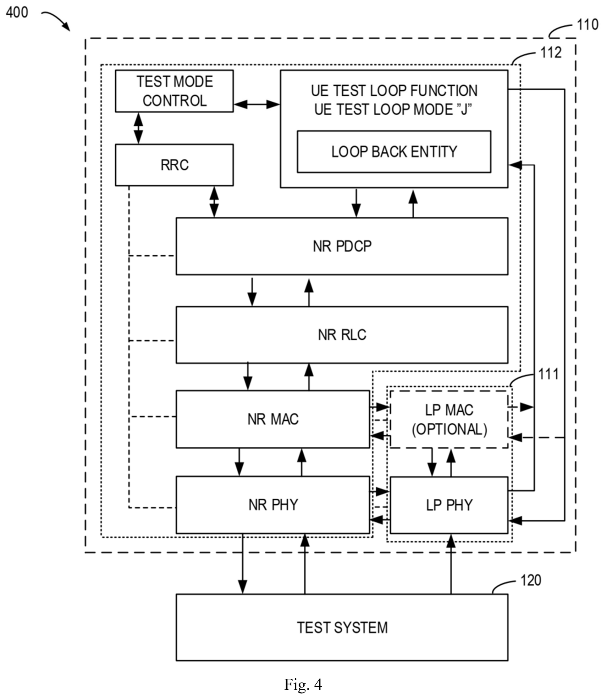

In some embodiments, the first test loop mode may be referred to as a test loop mode "J" in addition to test loop modes A to I currently defined in 3GPP technical specification 38.509. As shown in Fig. 4, the test loop mode "J" is illustrated with enhancement for LP-WUS and support for RRC idle mode, RRC inactive mode and RRC connected mode. The test loop functionality needs to be enabled in the LP-WUR section to ensure sleep mode is correctly enabled in the MR 112. This means a trigger signal between the LR 111 and MR 112 is needed to indicate when the measurement report is ready and the measurement report can be transferred to the test system. As the measurements are handled within the LR it is optional to transfer the results direct to the loop back entity to avoid additional communication layers and the loop back entity will handle the wakeup scenario of the MR 112. Then the MR 112 will be woken up and the data is transferred to the test system via the MR 112. When the MR 112 has finished the transfer - a trigger signal may be sent to the LR 111 from the loop back entity for continuing measurements and the MR 112 will re-enter sleep mode.

In some embodiments, the first test loop mode may be an extended test loop mode A or test loop mode B that supports the RRC connected mode, the RRC idle mode, and the RRC inactive mode. In some embodiments, the first apparatus 110 may enter the first test loop mode based on the indication.

In some embodiments, the second apparatus 120 may transmit a LP-WUS configuration to the first apparatus 110. Accordingly, the first apparatus 110 may receive the LP-WUS configuration. In some embodiments, the first apparatus 110 may perform at least one LP-WUS RRM measurement in the first test loop mode.

In some embodiments, the second apparatus 120 may transmit a low power synchronization signal (LP-SS) to the first apparatus 110. Accordingly, the first apparatus 110 may detect the LP-SS. In some embodiments, the LP-SS may be used for the LP-WUS RRM measurement. In some embodiments, the LP-SS may be scheduled with fixed time duration and likely be located in same frequency location as synchronization signal block (SSB) and with same center frequency. In some embodiments, the first apparatus 110 may detect and/or decode the LP-SS.

In some embodiments, the first apparatus 110 may calculate at least one measurement metric value. In some embodiments, the at least one measurement metric may comprise low power reference signal received power (LP-RSRP), low power reference signal received quality (LP-RSRQ), low power received signal strength indication (LP-RSSI), or other metric indication. In some embodiments, the LP-RSRP and the LP-RSRQ may be similar to RSRP and RSRQ for MR. It is to be understood that the at least one measurement metric value may be corresponding to the LP-SS. In other words, the at least one measurement metric value may be corresponding to a LP-WUS RRM measurement. In some embodiments, the at least one measurement metric value may be referred to as a sample of the LP-WUS RRM measurement. In some embodiments, the calculation may be referred to as a metric estimation. In some embodiments, the metric estimation may be based on an on-off keying (OOK) signal or alternatively based on an overlaid signal of an OOK "ON" part of a sequence. In some embodiments, the measurement metric value may be averaged estimates to avoid large fluctuations in fading condition. A number of average values may be scalable depending on a time between the scheduled LP-SS and whether metric estimation is based on OOK signal or the overlaid signal in the "ON" symbols.

In some embodiments, the first apparatus 110 may obtain first information for the at least one measurement metric. In some embodiments, the first information may be transmitted by the second apparatus 120, e.g. via RRC signaling. In some other embodiments, the first information may be specified in standards. For example, the first information may be specified in 3GPP technical specification 38.133 as a test case specific configuration value. In some embodiments, the first information may comprise at least one reference value, at least one requirement, or both. In some embodiments, a reference value may be corresponding to a measurement metric. In some embodiments, at least one requirement may be corresponding to a measurement metric. In some embodiments, the at least one requirement may comprise a tolerance value, an upper bound value, a lower bound value, or any combination thereof. In some embodiments, a reference value may be referred to as a reference level. In some embodiments, a tolerance value may be referred to as a tolerance level. In some embodiments, a requirement may be referred to as a specified requirement or accuracy requirement.

In some embodiments, the first apparatus 110 may determine pass or fail based on the first information. For example, the first information may comprise a reference value of a measurement metric and a tolerance value of the measurement metric. If the calculated measurement metric value is within the tolerance value compared with the reference value, the corresponding measurement may be determined to be pass, otherwise, the measurement may be determined to be fail. For another example, the first information may comprise an upper bound value of a measurement metric and a lower bound value of the measurement metric. If the calculated measurement metric value is within a range of the upper bound value and the lower bound value, the corresponding measurement may be determined to be pass, otherwise, the measurement may be determined to be fail.

In some embodiments, the first apparatus 110 may perform multiple LP-WUS RRM measurements in the first test loop mode. In other words, the first apparatus 110 may repeat the steps of detecting a LP-SS, calculating at least one measurement metric value and optionally determining pass or fail multiple times. In some embodiments, the multiple measurements may be referred to as a measurement cycle.

At 320, the first apparatus 110 may transmit a measurement report comprising results of multiple measurements to the second apparatus 120. Accordingly, the second apparatus 120 may receive the measurement report.

In some embodiments, the results of multiple measurements may comprise at least one of measurement metric values corresponding to the multiple measurements. In some embodiments, the at least one of measurement metric values may comprise measurement metric values corresponding to all to multiple measurements. In some other embodiments, the at least one of measurement metric values may comprise at least one measurement metric value corresponding to part of the multiple measurements. In some embodiments, the results of multiple measurements may comprise an average of measurement metric values corresponding to the multiple measurements. In some embodiments, the second apparatus 120 may parse the measurement report and determine pass or fail based on the measurement report. The procedure may be similar to the first apparatus 110 determining pass or fail described above.

In some other embodiments, the results of multiple measurements may comprise an indication of pass or fail for the multiple measurements. In some other embodiments, the results of multiple measurements may comprise a number of pass or fail for the multiple measurements.

In some other embodiments, if the test is executed in RRC connected mode, the result of the measurement may be transferred from the LR to the MR for each measurement. If the test is executed in RRC idle mode or RRC inactive mode, the results of the multiple measurements in the LR until time duration between each measurement report may be transferred to the second apparatus 120. In this way, a wakeup duration for the MR may be minimized and configurations for the procedure of the embodiments of present disclosure may be close to those in normal operation in the field.

In some embodiments, the second apparatus 120 may transmit a request for at least one measurement metric value of a subset of the multiple measurement metric values to the first apparatus 110. Accordingly, the first apparatus 110 may receive the request.

In some embodiments, the first apparatus 110 may transmit the at least one measurement metric value of a subset of the multiple measurement metric values to the second apparatus 120. Accordingly, the second apparatus 120 may receive the at least one measurement metric value. In some embodiments, the second apparatus 120 may verify the pass or fail for the multiple measurements transmitted by the first apparatus 110 based on the at least one measurement metric value. In some embodiments, the subset of the multiple measurement metric values may comprise one particular sample. In some other embodiments, the subset of the multiple measurement metric values may comprise one sample for each certain number.

In some embodiments, the second apparatus 120 may transmit a request to perform at least one further measurement to the first apparatus 110. Accordingly, the first apparatus 110 may receive the request. In some embodiments, the second apparatus 120 may transmit the request based on determining that at least one measurement fails, e.g. at least one measurement metric value is not within the tolerance value. In some embodiments, the further measurement may be the LP-WUS RRM measurement. In some embodiments, the further measurement may be performed according to different embodiments of the previous measurements. For example, for the previous measurements, the measurement report may comprise the indication of pass or fail, and for the further measurements, the measurement report may comprise at least one measurement metric value.

In some embodiments, the first apparatus 110 may obtain a configuration for the measurement report. In some embodiments, the configuration may comprise a number of average values, time for averaging, or frequency of reporting. In some embodiments, in RRC idle mode, the frequency of reporting may reflect wake-up time for main radio as the first apparatus 110 is in ultra-low power state. In some embodiments, the configuration may be transmitted by the second apparatus 120, for example, via RRC signaling. In some other embodiments, the configuration may be specified in standards. For example, the configuration may be specified in 3GPP technical specification 38.133 as a test case specific configuration value.

In some embodiments, the first apparatus 110 and the second apparatus 120 may initiate pre-condition before the test. In some embodiments, the first apparatus 110 may be connected to the second apparatus 120.

In some embodiments, the test may be repeated until user abort the test or until an expected time duration or number of measurements has been done. In some embodiments, the test may need to be passed 90% of runs.

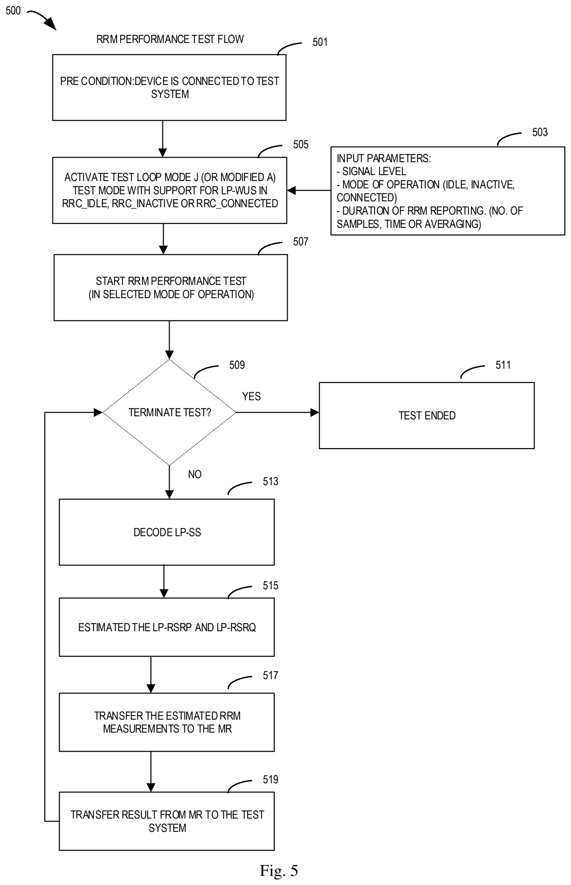

Reference is now made to Fig. 5, which shows a flowchart illustrating an example RRM performance test flow according to some embodiments of the present disclosure. The process 600 may involve a device as an example of the first apparatus 110 as illustrated in Fig. 1, and a test system as an example of the second apparatus 120 as illustrated in Fig. 1. The device may comprise a LR and a MR.

At 501, Pre-condition before the test is initiated (e.g. from test case parameters): the device is connected to the test system. At 503, input parameters are provided for the device. The input parameters may comprise a signal level, a mode of operation (idle, inactive, connected), a duration of RRM reporting (a number of samples, time or averaging), or any combination thereof.

At 505, the device activates test loop mode J (or modified A). The test loop mode supports for LP-WUS in RRC_Idle, RRC_Inactive or RRC_Connected. At 507, the device starts RRM performance test (in selected mode of operation).

At 509, the device determines whether to terminate the test. If yes, go to 511, the test ends. If no, go to 513, the device decodes a LP-SS. At 515, the device estimates LP-RSRP and LP-RSRQ. At 517, the LR of the device transfer estimated RRM measurements to the MR of the device. At 519, the device transfer result from the MR to the test system.

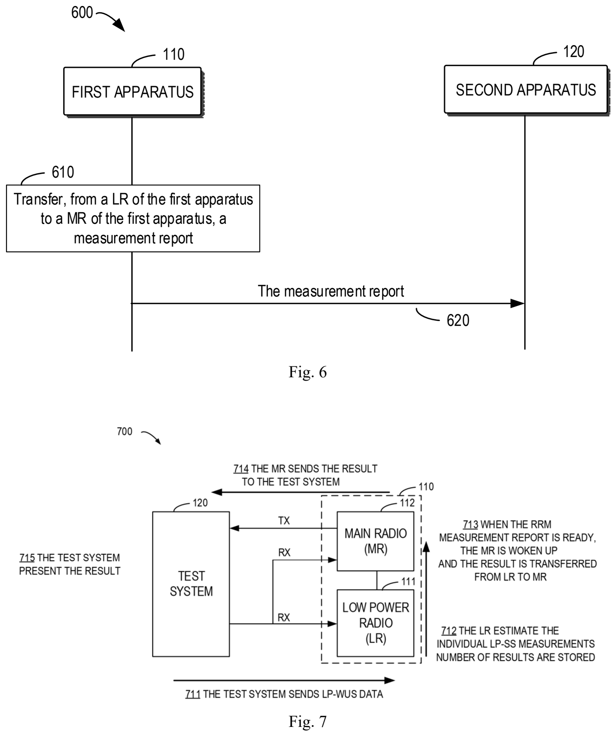

Reference is now made to Fig. 6, which shows a process 600 for LP-WUS RRM measurement according to some embodiments of the present disclosure. For the purpose of discussion, the process 600 will be described with reference to Fig. 1. The process 600 may involve the first apparatus 110 and the second apparatus 120 as illustrated in Fig. 1. The first apparatus 110 comprise a LR and a MR. A communication interface between the LR and the MR is provided.

At 610, the LR of the first apparatus 110 may transfer a measurement report comprising results of multiple LP-WUS RRM measurements to the MR of the first apparatus 110.

In some embodiments, the LR of the first apparatus 110 may estimate the results of the multiple LP-WUS RRM measurements. In some embodiments, the second apparatus 120 may transmit LP-WUS data (e.g. the LP-SS) to the LR of the first apparatus 110. Accordingly, the LR of the first apparatus 110 may receive the LP-WUS data and estimate the results of the multiple measurements based on the LP-WUS data. In some embodiments, the LR of the first apparatus 110 may estimate the results of the multiple measurements by: decoding the LP-WUS data and calculating at least one measurement metric. In some embodiments, the at least one measurement metric may comprise LP-RSRP, LP-RSRQ, LP-RSSI, or other metric indication. In some embodiments, the LR of the first apparatus 110 may store the results of multiple LP-WUS RRM measurements.

At 620, the MR of the first apparatus 110 may transmit the measurement report to the second apparatus 120. In some embodiments, the first apparatus 110 may wake up the MR of the first apparatus 110 based on determining that the measurement report is ready, and the LR of the first apparatus 110 may transfer the measurement report after the MR of the first apparatus 110 is woken up.

In some embodiments, first information may be transferred between the LR of the first apparatus 110 and the MR of the first apparatus 110. In some embodiments, the first information may comprise a first test loop mode for a test of the LP-WUS RRM measurement, the test of the LP-WUS RRM measurement, a duration of the test, averaging of multiple LP-WUS RRM measurements, a radio resource control (RRC) state, a format of a measurement report, or any combination thereof. In some embodiments, the first test loop mode supports a radio resource control (RRC) connected mode, an RRC idle mode, and an RRC inactive mode. In some embodiments, the first test loop mode may be invoked and implemented in the MR.

The process 600 introduces the communication interface between the LR and the MR, which may enable the LR and the MR to transfer information for the RRM measurement to each other. In this way, the RRM measurement may be performed for all RRC modes.

Fig. 7 illustrate an example process 700 for LP-WUS RRM measurement according to some embodiments of the present disclosure. The process 700 may involve the first apparatus 110 and a test system as an example of the second apparatus 120 as illustrated in Fig. 1. The first apparatus 110 comprise a LR 111 and a MR 112.

At 711, the test system sends LP-WUS data. At 712, the LR 111 estimate the individual LP-SS measurements. Number of results are stored. At 713, when the RRM measurement report is ready, the MR 112 is woken up and the result is transferred from the LR 111 to the MR 112. At 714, the MR 112 sends the result to the test system. At 715, the test system presents the result.

An example test procedure is described as below. The test procedure may involve a user equipment (UE) as an example of the first apparatus 110 as illustrated in Fig. 1, and a system simulator (SS) as an example of the second apparatus 120 as illustrated in Fig. 1.
1. Ensure the UE is in state RRC_CONNECTED with generic procedure parameters Connectivity NR, Connected without release On and Test Mode On (e.g. according to TS 38.508-1 [14] clause 4.5).
2. Set the parameters according to measurement accuracy test parameters as appropriate.
3. The SS can transmit an RRCReconfiguration message on Cell 1.
4. The UE can transmit an RRCReconfigurationComplete message.
5. The UE can transmit MeasurementReport messages and 'pass/fail' reports as pre-configured by SS.
6. The SS may check LP-SS-RSRP reported values in the periodic MeasurementReport transmitted by the UE. The LP-SS-RSRP value of Cell 2 reported by the UE is compared to an expected LP-SS-RSRP. If the value is outside the limits of accuracy requirements or the UE fails to report the measurement value for Cell 2, a number of failed iterations is increased by one. Otherwise, a number of passed iterations is increased by one if UE has reported 'pass', or the number of failed iterations is increased by one if UE reported 'fail'.
7. The SS may continue checking the MeasurementReport messages transmitted by the UE until a confidence level is achieved.
8. Set the parameters according to each sub-test of measurement accuracy test parameters as appropriate and repeat steps 5-7.

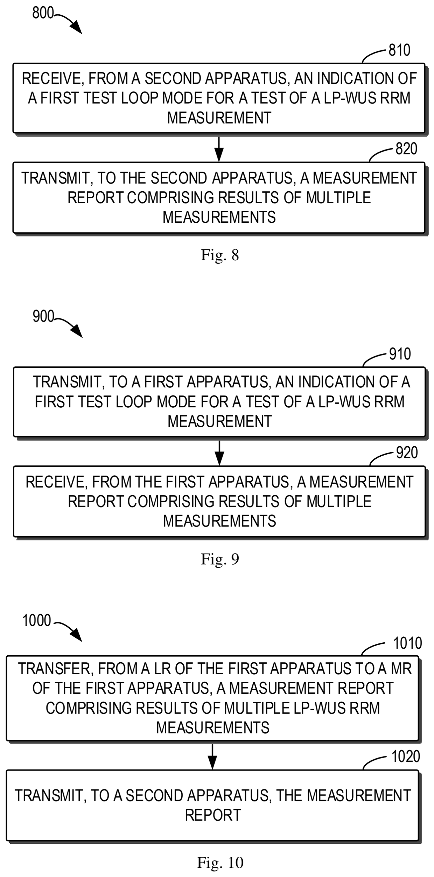

Fig. 8 shows a flowchart of an example method 800 implemented at a first apparatus in accordance with some embodiments of the present disclosure. For the purpose of discussion, the method 800 will be described from the perspective of the first apparatus 110 with reference to Fig. 1.

At block 810, the first apparatus 110 may receive, from the second apparatus 120, an indication of a first test loop mode for a test of a LP-WUS RRM measurement. The first test loop mode may support an RRC connected mode, an RRC idle mode, and an RRC inactive mode. At block 820, the first apparatus 110 may transmit, to the second apparatus 120, a measurement report comprising results of multiple measurements.

In some embodiments, the first apparatus 110 may obtain a configuration for the measurement report. The configuration comprises at least one of: a number of average values, time for averaging, or frequency of reporting.

In some embodiments, the first apparatus 110 may detect a LP-SS transmitted by the second apparatus 120. The first apparatus 110 may calculate at least one measurement metric value. The at least one measurement metric may comprise at least one of: LP-RSRP, LP-RSRQ, LP-RSSI, or other metric indication.

In some embodiments, the results of multiple measurements may comprise at least one of measurement metric values corresponding to the multiple measurements.

In some embodiments, the results of multiple measurements may comprise an indication of pass or fail for the multiple measurements or a number of pass or fail for the multiple measurements.

In some embodiments, the first apparatus 110 may obtain first information for the at least one measurement metric. The first information may comprise at least one of: at least one reference value, or at least one requirement. The first apparatus 110 may determine the pass or fail based on the first information.

In some embodiments, the at least one requirement may comprise at least one of the following: a tolerance value, an upper bound value, or a lower bound value.

In some embodiments, the first apparatus 110 may receive, from the second apparatus 120, a request for at least one measurement metric value of a subset of the multiple measurement metric values. The first apparatus 110 may transmit, to the second apparatus 120, the at least one measurement metric value of the subset of the multiple measurement metric values.

In some embodiments, the first apparatus 110 may receive, from the second apparatus 120, a request to perform at least one further measurement. The first apparatus 110 may perform at least one further measurement based on the request.

In some embodiments, the first apparatus may comprise a user equipment, or the second apparatus may comprise a system simulator.

Fig. 9 shows a flowchart of an example method 900 implemented at a second apparatus in accordance with some embodiments of the present disclosure. For the purpose of discussion, the method 800 will be described from the perspective of the second apparatus 120 with reference to Fig. 1.

At block 910, the second apparatus 120 may transmit, to the first apparatus 110, an indication of a first test loop mode for a test of a LP-WUS RRM measurement. The first test loop mode supports an RRC connected mode, an RRC idle mode, and an RRC inactive mode. At block 920, the second apparatus 120 may receive, from the first apparatus 110, a measurement report comprising results of multiple measurements.

In some embodiments, the second apparatus 120 may transmit, to the first apparatus 110, a configuration for the measurement report. The configuration may comprise at least one of: a number of average values, time for averaging, or frequency of reporting.

In some embodiments, the results of multiple measurements may comprise at least one measurement metric value corresponding to the multiple measurements.

In some embodiments, the measurement metric may comprise at least one of: LP-RSRP, LP-RSRQ, LP-RSSI, or other metric indication.

In some embodiments, the second apparatus 120 may determine pass or fail for the multiple measurements based on the measurement report.

In some embodiments, the second apparatus 120 may determine the pass or fail based on first information for the at least one measurement metric. The first information may comprise at least one of: at least one reference value, or at least one requirement.

In some embodiments, the at least one requirement may comprise at least one of: a tolerance value, an upper bound value, or a lower bound value.

In some embodiments, the results of multiple measurements may comprise an indication of pass or fail of the multiple measurements or a number of pass or fail for the multiple measurements.

In some embodiments, the second apparatus 120 may transmit, to the first apparatus 110, first information for the at least one measurement metric. The first information may comprise at least one of: at least one reference value, or at least one requirement.

In some embodiments, the second apparatus 120 may transmit, to the first apparatus 110, a request for at least one measurement metric value of a subset of the multiple measurement metric values. The second apparatus 120 may receive, from the first apparatus 110, the at least one measurement metric value of the subset of the multiple measurement metric values.

In some embodiments, the second apparatus 120 may transmit, to the first apparatus 110, a request to perform at least one further measurement.

In some embodiments, the first apparatus may comprise a user equipment, or the second apparatus may comprise a system simulator.

Fig. 10 shows a flowchart of an example method 1000 implemented at a first apparatus in accordance with some embodiments of the present disclosure. For the purpose of discussion, the method 1000 will be described from the perspective of the first apparatus 110 with reference to Fig. 1.

At block 1010, the LR of the first apparatus 110 may transfer, to the MR of the first apparatus 110, a measurement report comprising results of multiple LP-WUS RRM measurements. At block 1010, the MR of the first apparatus 110 may transmit, to a second apparatus 120, the measurement report.

In some embodiments, the LR of the first apparatus 110 may estimate the results of the multiple LP-WUS RRM measurements. The LR of the first apparatus 110 may store the results of multiple LP-WUS RRM measurements.

In some embodiments, the LR of the first apparatus 110 may estimate the results of the multiple LP-WUS RRM measurements by: receiving, from a second apparatus, LP-WUS data; and estimating the results of the multiple measurements based on the LP-WUS data.

In some embodiments, the LR of the first apparatus 110 may estimate the results of the multiple measurements by: decoding the LP-WUS data; and calculating at least one measurement metric. The at least one measurement metric may comprise at least one of: LP-RSRP, LP-RSRQ, LP-RSSI, or other metric indication.

In some embodiments, the LR of the first apparatus 110 may transfer the measurement report by: based on determining that the measurement report is ready, waking up the MR of the first apparatus; and transferring the measurement report.

In some embodiments, the first apparatus 110 may transfer, between the LR of the first apparatus 110 and the MR of the first apparatus 110, first information comprising at least one of: a first test loop mode for a test of the LP-WUS RRM measurement, the test of the LP-WUS RRM measurement, a duration of the test, averaging of multiple LP-WUS RRM measurements, a radio resource control (RRC) state, or a format of a measurement report.

In some embodiments, the first test loop mode supports a radio resource control (RRC) connected mode, an RRC idle mode, and an RRC inactive mode.

In some embodiments, the first apparatus may comprise a user equipment, or the second apparatus may comprise a system simulator.

In some embodiments, an apparatus capable of performing any of the method 800 (for example, the first apparatus 110) may comprise means for performing the respective steps of the method 800. The means may be implemented in any suitable form. For example, the means may be implemented in a circuitry or software module.

In some embodiments, the apparatus comprises means for receiving, from the second apparatus 120, an indication of a first test loop mode for a test of a LP-WUS RRM measurement. The first test loop mode may support an RRC connected mode, an RRC idle mode, and an RRC inactive mode. The apparatus further comprises means for transmitting, to the second apparatus 120, a measurement report comprising results of multiple measurements.

In some embodiments, the apparatus further comprises means for obtaining a configuration for the measurement report. The configuration comprises at least one of: a number of average values, time for averaging, or frequency of reporting.

In some embodiments, the apparatus further comprises means for detecting a LP-SS transmitted by the second apparatus 120. The apparatus further comprises means for calculating at least one measurement metric value. The at least one measurement metric may comprise at least one of: LP-RSRP, LP-RSRQ, LP-RSSI, or other metric indication.

In some embodiments, the results of multiple measurements may comprise at least one of measurement metric values corresponding to the multiple measurements.

In some embodiments, the results of multiple measurements may comprise an indication of pass or fail for the multiple measurements or a number of pass or fail for the multiple measurements.

In some embodiments, the apparatus further comprises means for obtaining first information for the at least one measurement metric. The first information may comprise at least one of: at least one reference value, or at least one requirement. The apparatus further comprises means for determining the pass or fail based on the first information.

In some embodiments, the at least one requirement may comprise at least one of the following: a tolerance value, an upper bound value, or a lower bound value.

In some embodiments, the apparatus further comprises means for receiving, from the second apparatus 120, a request for at least one measurement metric value of a subset of the multiple measurement metric values. The apparatus further comprises means for transmitting, to the second apparatus 120, the at least one measurement metric value of the subset of the multiple measurement metric values.

In some embodiments, the apparatus further comprises means for receiving, from the second apparatus 120, a request to perform at least one further measurement. The apparatus further comprises means for performing at least one further measurement based on the request.

In some embodiments, the first apparatus may comprise a user equipment, or the second apparatus may comprise a system simulator.

In some embodiments, the apparatus further comprises means for performing other steps in some embodiments of the method 800. In some embodiments, the means comprises at least one processor and at least one memory including computer program code, the at least one memory and computer program code configured to, with the at least one processor, cause the performance of the apparatus.

In some embodiments, an apparatus capable of performing any of the method 900 (for example, the second apparatus 120) may comprise means for performing the respective steps of the method 900. The means may be implemented in any suitable form. For example, the means may be implemented in a circuitry or software module.

In some embodiments, the apparatus comprises means for transmitting, to the first apparatus 110, an indication of a first test loop mode for a test of a LP-WUS RRM measurement. The first test loop mode supports an RRC connected mode, an RRC idle mode, and an RRC inactive mode. The apparatus further comprises means for receiving, from the first apparatus 110, a measurement report comprising results of multiple measurements.

In some embodiments, the apparatus further comprises means for transmitting, to the first apparatus 110, a configuration for the measurement report. The configuration may comprise at least one of: a number of average values, time for averaging, or frequency of reporting.

In some embodiments, the results of multiple measurements may comprise at least one measurement metric value corresponding to the multiple measurements.

In some embodiments, the measurement metric may comprise at least one of: LP-RSRP, LP-RSRQ, LP-RSSI, or other metric indication.

In some embodiments, the apparatus further comprises means for determining pass or fail for the multiple measurements based on the measurement report.

In some embodiments, the apparatus further comprises means for determining the pass or fail based on first information for the at least one measurement metric. The first information may comprise at least one of: at least one reference value, or at least one requirement.

In some embodiments, the at least one requirement may comprise at least one of: a tolerance value, an upper bound value, or a lower bound value.

In some embodiments, the results of multiple measurements may comprise an indication of pass or fail of the multiple measurements or a number of pass or fail for the multiple measurements.

In some embodiments, the apparatus further comprises means for transmitting, to the first apparatus 110, first information for the at least one measurement metric. The first information may comprise at least one of: at least one reference value, or at least one requirement.

In some embodiments, the apparatus further comprises means for transmitting, to the first apparatus 110, a request for at least one measurement metric value of a subset of the multiple measurement metric values. The apparatus further comprises means for receiving, from the first apparatus 110, the at least one measurement metric value of the subset of the multiple measurement metric values.

In some embodiments, the apparatus further comprises means for transmitting, to the first apparatus 110, a request to perform at least one further measurement.

In some embodiments, the first apparatus may comprise a user equipment, or the second apparatus may comprise a system simulator.

In some embodiments, the apparatus further comprises means for performing other steps in some embodiments of the method 900. In some embodiments, the means comprises at least one processor and at least one memory including computer program code, the at least one memory and computer program code configured to, with the at least one processor, cause the performance of the apparatus.

In some embodiments, an apparatus capable of performing any of the method 1000 (for example, the first apparatus 110) may comprise means for performing the respective steps of the method 1000. The means may be implemented in any suitable form. For example, the means may be implemented in a circuitry or software module.

In some embodiments, the apparatus comprises means for transferring, from the LR of the first apparatus to the MR of the first apparatus 110, a measurement report comprising results of multiple LP-WUS RRM measurements. The apparatus further comprises means for transmitting, from the MR of the first apparatus 110 to a second apparatus 120, the measurement report.

In some embodiments, the apparatus further comprises means for estimating the results of the multiple LP-WUS RRM measurements. The apparatus further comprises means for storing the results of multiple LP-WUS RRM measurements.

In some embodiments, the apparatus further comprises means for receiving, from a second apparatus, LP-WUS data; and means for estimating the results of the multiple measurements based on the LP-WUS data.

In some embodiments, the apparatus further comprises means for decoding the LP-WUS data; and calculating at least one measurement metric. The at least one measurement metric may comprise at least one of: LP-RSRP, LP-RSRQ, LP-RSSI, or other metric indication.

In some embodiments, the apparatus further comprises means for based on determining that the measurement report is ready, waking up the MR of the first apparatus; and means for transferring the measurement report.

In some embodiments, the apparatus further comprises means for transferring, between the LR of the first apparatus 110 and the MR of the first apparatus 110, first information comprising at least one of: a first test loop mode for a test of the LP-WUS RRM measurement, the test of the LP-WUS RRM measurement, a duration of the test, averaging of multiple LP-WUS RRM measurements, a radio resource control (RRC) state, or a format of a measurement report.

In some embodiments, the first test loop mode supports a radio resource control (RRC) connected mode, an RRC idle mode, and an RRC inactive mode.

In some embodiments, the first apparatus may comprise a user equipment, or the second apparatus may comprise a system simulator.

In some embodiments, the apparatus further comprises means for performing other steps in some embodiments of the method 1000. In some embodiments, the means comprises at least one processor and at least one memory including computer program code, the at least one memory and computer program code configured to, with the at least one processor, cause the performance of the apparatus.

The invention can be implemented as new test procedures into 3GPP TS 38.533, an example for LP-SS-RSRP measurement is shown below.

### 7.1 Test Procedure for LP-SS-RSRP in 3GPP TS38.533

### 7.1.1.1.1 LP-SS-RSRP absolute measurement accuracy

### 7.1.1.1.1.1 Test purpose

The purpose of this test is to verify that the intra-frequency LP-SS-RSRP absolute measurement accuracy is within the specified limits for all bands.

### 7.1.1.1.1.2 Test applicability

This test applies to all types of NR UE supporting LP-WUS from Release 19 onwards.

### 7.1.1.1.1.3 Minimum conformance requirements

The minimum conformance requirements are specified in clause 7.1.1.0.1.

The normative reference for this requirement is TS 38.133 [6] clause A.7.1.1.1.

### 7.1.1.1.1.4 Test description

### 7.1.1.1.1.4.1 Initial conditions

This test shall be tested using any of the test configurations in Table 7.1.1.1.1.4.1-1.

**Table 7.1.1.1.1.4.1-1: NR SA FR1 LP-SS-RSRP measurement accuracy supported test configurations**

| **Test Case ID** | **Description** |
|---|---|
| 7.1.1.1.1-1 | NR: 15 kHz LP-SS SCS, 10MHz bandwidth, FDD |
| 7.1.1.1.1-2 | NR: 15 kHz LP-SS SCS, 10MHz bandwidth, TDD |
| 7.1.1.1.1-3 | NR: 30 kHz LP-SS SCS, 40MHz bandwidth, TDD |
| Note: The UE is only required to be tested in one of the supported test configurations | |

Configure the test equipment and the DUT according to the parameters in Table 7.1.1.1.1.4.1-2.

**Table 7.1.1.1.1.4.1-2: Initial conditions for LP-SS-RSRP intra frequency absolute accuracy in FR1**

| Parameter | Value | | Comment |
|---|---|---|---|
| Test environment | NC, TL/VL, TL/VH, TH/VL, TH/VH | | As specified in TS 38.508-1 [14] clause 4.1. |
| Test frequencies | As specified in Annex E, Table E.4-1 and TS 38.508-1 [14] clause 4.3.1. | | |
| Channel bandwidth | As specified by the test configuration selected from Table 7.1.1.1.1.4.1-1. | | |
| Propagation conditions | AWGN | | As specified in Annex C.2.2. |
| Connection Diagram | TE Part 2Rx | A.3.1.8.2 with n = 2 and φ₁ = 5 Hz | As specified in TS 38.508-1 [14] Annex A. |
| | TE Part 4Rx | A.3.1.8.5 with n = 2 and φ_{1,1} = 5 Hz, φ_{1,2} = 10 Hz, φ_{1,3} = 15 Hz | |
| | DUT Part 2Rx | A.3.2.3.4 | |
| | DUT Part 4Rx | A.3.2.5.2 | |
| Exceptions to connection diagram | - Without LTE link | | |

1. Message contents are defined in clause 7.1.1.1.1.4.3.
2. Cell 1 is the NR FR1 serving cell (PCell) and Cell 2 is the NR neighbour in the same frequency and the target cell for LP-SS-RSRP measurements. The connection setup is done according to the settings in Annex C.1.1 and C.1.2.

### 7.1.1.1.1.4.2 Test procedure

1. Ensure the UE is in state RRC_CONNECTED with generic procedure parameters Connectivity NR, Connected without release On and Test Mode On according to TS 38.508-1 [14] clause 4.5.
2. Set the parameters according to Table 7.1.1.1.1.5-1 as appropriate.
3. The SS shall transmit an RRCReconfiguration message on Cell 1.
4. The UE shall transmit an RRCReconfigurationComplete message.
5. The UE shall transmit MeasurementReport messages and 'pass/fail' reports as pre-configured by SS.
6. The SS shall check the LP-SS-RSRP reported values in the periodic MeasurementReport transmitted by the UE. The LP-SS-RSRP value of Cell 2 reported by the UE is compared to the expected LP-SS-RSRP. If the value is outside the limits in Table 7.1.1.1.1.5-2 or the UE fails to report the measurement value for Cell 2, the number of failed iterations is increased by one. Otherwise, the number of passed iterations is increased by one if UE has reported 'pass', or the number of failed iterations is increased by one if UE reported 'fail'.
7. The SS shall continue checking the MeasurementReport messages transmitted by the UE until the confidence level according to Table G.2.3-1 in Annex G is achieved.
8. Set the parameters according to each sub-test in Table 7.1.1.1.1.5-1 as appropriate and repeat steps 5-7.

### 7.1.1.1.1.4.3 Message contents

Message contents are according to TS 38.508-1 [14] clause 7.3 with the following exceptions:

**Table 7.1.1.1.1.4.3-1: Common Exception messages for NR SA FR1 LP-SS-RSRP absolute measurement accuracy**

| **Default Message Contents** | |
|---|---|
| Common contents of system information blocks exceptions | |
| Default RRC messages and information elements contents exceptions | Table H.3.1-1 |
| | Table H.3.1-2 |
| | Table H.3.1-5 |
| | Table H.3.1-7 |
| Specific message contents exceptions for Test Configuration 7.1.1.1.1-1 | Table H.3.1-3 with Condition LP-SS.1 FR1 |
| | Table 7.3.1-3 in TS 38.508-1 [14] with condition SMTC.2 |
| Specific message contents exceptions for Test Configuration 7.1.1.1.1-2 | Table H.3.1-3 with Condition LP-SS.1 FR1 and Synchronous cells |
| | Table 7.3.1-3 in TS 38.508-1 [14] with condition SMTC.1 |
| Specific message contents exceptions for Test Configuration 7.1.1.1.1-3 | Table H.3.1-3 with Condition LP-SS.2 FR1 and Synchronous cells |
| | Table 7.3.1-3 in TS 38.508-1 [14] with condition SMTC.1 |

**Table 7.1.1.1.1.4.3-2: ReportConfigNR-DEFAULT(Periodical) for NR SA FR1 LP-SS-RSRP Accuracy**

| | | | |
|---|---|---|---|
| Derivation Path: 38.508-1 [14] Table 4.6.3-142 with condition PERIODICAL | | | |

| **Information Element** | **Value/remark** | **Comment** | **Condition** |
|---|---|---|---|
| ReportConfigNR::= SEQUENCE { | | | |
| reportType CHOICE { | | | |
| periodical SEQUENCE { | | | PERIODICAL |
| reportQuantityCell SEQUENCE { | | | |
| rsrq | false | | |
| sinr | false | | |
| } | | | |
| maxReportcells | 2 | | |
| } | | | |
| } | | | |
| } | | | |

### 7.1.1.1.1.5 Test requirement

Table 7.1.1.1.1.5-1 defines the primary level settings including test tolerances for all tests.

Each LP-SS-RSRP measurement report for each of the tests in Table 7.1.1.1.1.5-1 shall meet the corresponding absolute accuracy requirements in Table 7.1.1.1.1.5-2 for test configurations 1 and 2, and the corresponding absolute accuracy requirements in Table 7.1.1.1.1.5-3 for test configuration 3.

**Table 7.1.1.1.1.5-1: NR SA FR1 LP-SS-RSRP measurement accuracy test parameters**

| **Parameter** | | | **Unit** | Test 1 | | Test 2 | | Test 3 | |
|---|---|---|---|---|---|---|---|---|---|
| | | | | Cell 1 | Cell 2 | Cell 1 | Cell 2 | Cell 1 | Cell 2 |
| Physical cell ID | | | | 489 | 0 | 489 | 0 | 489 | o |
| LP-SS ARFCN | | | | freq1 | | freq1 | | freq1 | |
| Duplex mode | | Config 1 | | FDD | | | | | |
| | | Config 2,3 | | TDD | | | | | |
| TDD configuration | | Config 1 | | Not Applicable | | | | | |
| | | Config 2 | | TDDConf.1.1 | | | | | |
| | | Config 3 | | TDDConf.2.1 | | | | | |
| BW_{channel} | | Config 1 | MHz | 10: N_{RB,c} = 52 | | | | | |
| | | Config 2 | | 10: N_{RB,c} = 52 | | | | | |
| | | Config 3 | | 40: N_{RB,c} = 106 | | | | | |
| BWP BW | | Config 1 | | 10: N_{RB,c} = 52 | | | | | |
| | | Config 2 | | 10: N_{RB,c} = 52 | | | | | |
| | | Config 3 | | 40: N_{RB,c} = 106 | | | | | |
| Downlink initial BWP configuration | | | | DLBWP.0.1 | | | | | |
| Downlink dedicated BWP configuration | | | | DLBWP.1.1 | | | | | |
| Uplink initial BWP configuration | | | | ULBWP.0.1 | | | | | |
| Uplink dedicated BWP configuration | | | | ULBWP.1.1 | | | | | |
| DRx Cycle | | | ms | Not Applicable | | | | | |
| LP-SS configuration | | Config 1 | | LP-SS 1.FR1 | LP-SS.1 FR1 | LP-SS 1.FR1 | LP-SS.1 FR1 | LP-SS 1.FR1 | LP-SS.1 FR1 |
| | | Config 2 | | LP-SS 1.FR1 | LP-SS.1 FR1 | LP-SS 1.FR1 | LP-SS.1 FR1 | LP-SS 1.FR1 | LP-SS.1 FR1 |
| | | Config 3 | | LP-SS 2.FR1 | LP-SS.2 FR1 | LP-SS 2.FR1 | LP-SS.2 FR1 | LP-SS 2.FR1 | LP-SS.2 FR1 |
| Time offset with Cell 2 | | Config 1 | ms | - | 3 | - | 3 | - | 3 |
| | | Config 2,3 | µs | - | 3 | - | 3 | - | 3 |
| SMTC Configuration | | Config 1 | | SMTC.2 | | | | | |
| | | Config 2,3 | | SMTC.1 | | | | | |
| OCNG Patterns | | | | OP.1 | | | | | |
| *N_{oc}*^{Note2} | Confi g 1,2 | Dependin g on band group | dBm/15Kh Z | -107.5 | | -88 | | -114 + Δ_{BG_offset} | |
| | Confi g 3 | Dependin g on band group | | N/A^{Note 6} | | -94 | | -115 + Δ_{BG_offset} | |

| *N_{oc}*^{Note2} | Config 1,2 | | dBm/SCS | -107.4 | | -88 | | Same as Noc/15kHz | |
|---|---|---|---|---|---|---|---|---|---|
| | Confi g 3 | Dependin g on band group | | N/A^{Note} 6 | | -91 | | -112 + Δ_{BG_offset} | |
| *Êₛ*/*Iₒₜ* | | | dB | 1.88 | -5.57 | 1.88 | -5.57 | 0.09 | 0.09 |
| *Êₛ*/*N_{oc}* | | | dB | 6 | 1.4 | 6 | 1.4 | 3 | 3 |
| LP-SS-RSRP^{Note 3} | Confi g 1,2 | Dependin g on band group | dBm/SCS | -101.5 | -106.1 | -111 + Δ_{BG_offset} | -111 + Δ_{BG_offset} | -113 + Δ_{BG_offse t} | -116.8 + Δ_{BG_offse t} |
| | Confi g 3 | Dependin g on band group | | N/A^{Not e 6} | N/A^{Not e 6} | -109+ Δ_{BG_offse t} | -109+ Δ_{BG_offse t} | -110+ Δ_{BG_offse t} | -113.8+ Δ_{BG_offse t} |
| Io^{Note3} | Confi g 1,2 | Dependin g on band group | dBm/ 9.36MHz | -71.68 | | -52.18 | | -80.39+ Δ_{BG_offset} | |
| | Confi g 3 | Dependin g on band group | dBm/ 38.16MHz | N/A^{Note 6} | | -51.91 | | -75.12 + Δ_{BG_offset} | |
| Propagation condition | | | - | AWGN | | | | | |
| Antenna configuration | | | | 1x2 | | | | | |
| Note 1: OCNG shall be used such that both cells are fully allocated and a constant total transmitted power spectral density is achieved for all OFDM symbols. | | | | | | | | | |
| Note 2: Interference from other cells and noise sources not specified in the test is assumed to be constant over subcarriers and time and shall be modelled as AWGN of appropriate power for *N_{oc}* to be fulfilled. | | | | | | | | | |
| Note 3: LP-SS-RSRP and Io levels have been derived from other parameters for information purposes. They are not settable parameters themselves. | | | | | | | | | |
| Note 4: LP-SS-RSRP minimum requirements are specified assuming independent interference and noise at each receiver antenna port. | | | | | | | | | |
| Note 5: Δ_{BC_offset} is defined in clause 3A.4, Table 3A.4.1-2. | | | | | | | | | |
| Note 6: Subtest 1 is not used when testing with 30kHz LP-SS SCS. | | | | | | | | | |

**Table 7.1.1.1.1.5-2: LP-SS-RSRP Intra frequency absolute accuracy requirements for the reported values for test configurations 1 and 2**

| **Normal Conditions** | **Test 1 All bands** | **Test 2 All bands** | **Test 3** | |
|---|---|---|---|---|
| Lowest reported value (Cell 2) | 44 | 60 | Bands NR_FDD_FR1_A, NR_TDD_FR1_A | 36 |
| | | | Bands NR_FDD_FR1_B | 36 |
| | | | Bands NR_TDD_FR1_C | 37 |
| | | | Bands NR_FDD_FR1_D, NR_TDD_FR1_D | 37 |
| | | | Bands NR_FDD_FR1_E, Bands NR_TDD_FR1_E | 38 |
| | | | Bands NR_FDD_FR1_G | 39 |
| | | | Bands NR_FDD_FR1_H | 39 |
| Highest reported value (Cell 2) | 56 | 79 | NR_FDD_FR1_A, NR_TDD_FR1_A | 48 |
| | | | NR_FDD_FR1_B | 48 |
| | | | NR_TDD_FR1_C | 49 |
| | | | NR_FDD_FR1_D, NR_TDD_FR1_D | 49 |
| | | | NR_FDD_FR1_E, NR_TDD_FR1_E | 50 |
| | | | NR_FDD_FR1_G | 51 |
| | | | NR_FDD_FR1_H | 51 |

| **Extreme Conditions** | **Test 1 All bands** | **Test 2 All bands** | **Test 3** | |
|---|---|---|---|---|
| Lowest reported value (Cell 2) | 40 | 57 | Bands NR_FDD_FR1_A, NR_TDD_FR1_A | 31 |
| | | | Bands NR_FDD_FR1_B | 32 |
| | | | Bands NR_TDD_FR1_C | 32 |
| | | | Bands NR_FDD_FR1_D, NR_TDD_FR1_D | 33 |
| | | | Bands NR_FDD_FR1_E, Bands NR_TDD_FR1_E | 33 |
| | | | Bands NR_FDD_FR1_G | 34 |
| | | | Bands NR_FDD_FR1_H | 35 |
| Highest reported value (Cell 2) | 61 | 82 | Bands NR_FDD_FR1_A, NR_TDD_FR1_A | 52 |
| | | | Bands NR_FDD_FR1_B | 53 |
| | | | Bands NR_TDD_FR1_C | 53 |
| | | | Bands NR_FDD_FR1_D, NR_TDD_FR1_D | 54 |
| | | | Bands NR_FDD_FR1_E, Bands NR_TDD_FR1_E | 54 |
| | | | Bands NR_FDD_FR1_G | 55 |
| | | | Bands NR_FDD_FR1_H | 56 |
| Note 1: NR operating band groups are as defined in Section 3A.4.1. | | | | |

**Table 7.1.1.1.1.5-3: LP-SS-RSRP Intra frequency absolute accuracy requirements for the reported values for test configuration 3**

| **Normal Conditions** | **Test 1 All bands** | **Test 2 All bands** | **Test 3** | |
|---|---|---|---|---|
| Lowest reported value (Cell 2) | N/A | 57 | Bands NR_FDD_FR1_A, NR_TDD_FR1_A | 38 |
| | | | Bands NR_FDD_FR1_B | 38 |
| | | | Bands NR_TDD_FR1_C | 39 |
| | | | Bands NR_FDD_FR1_D, NR_TDD_FR1_D | 39 |
| | | | Bands NR_FDD_FR1_E, Bands NR_TDD_FR1_E | 40 |
| | | | Bands NR_FDD_FR1_G | 41 |
| | | | Bands NR_FDD_FR1_H | 41 |
| Highest reported value (Cell 2) | N/A | 76 | Bands NR_FDD_FR1_A, NR_TDD_FR1_A | 50 |
| | | | Bands NR_FDD_FR1_B | 50 |
| | | | Bands NR_TDD_FR1_C | 51 |
| | | | Bands NR_FDD_FR1_D, NR_TDD_FR1_D | 51 |
| | | | Bands NR_FDD_FR1_E, Bands NR_TDD_FR1_E | 52 |
| | | | Bands NR_FDD_FR1_G | 53 |
| | | | Bands NR_FDD_FR1_H | 53 |

| **Extreme Conditions** | **Test 1 All bands** | **Test 2 All bands** | **Test 3** | |
|---|---|---|---|---|
| Lowest reported value (Cell 2) | N/A | 54 | Bands NR_FDD_FR1_A, NR_TDD_FR1_A | 33 |
| | | | Bands NR_FDD_FR1_B | 34 |
| | | | Bands NR_TDD_FR1_C | 34 |
| | | | Bands NR_FDD_FR1_D, NR_TDD_FR1_D | 35 |
| | | | Bands NR_FDD_FR1_E, Bands NR_TDD_FR1_E | 35 |
| | | | Bands NR_FDD_FR1_G | 36 |
| | | | Bands NR_FDD_FR1_H | 37 |
| Highest reported value (Cell 2) | N/A | 79 | Bands NR_FDD_FR1_A, NR_TDD_FR1_A | 54 |
| | | | Bands NR_FDD_FR1_B | 55 |
| | | | Bands NR_TDD_FR1_C | 55 |
| | | | Bands NR_FDD_FR1_D, NR_TDD_FR1_D | 56 |
| | | | Bands NR_FDD_FR1_E, Bands NR_TDD_FR1_E | 56 |
| | | | Bands NR_FDD_FR1_G | 57 |
| | | | Bands NR_FDD_FR1_H | 58 |

For the test to pass, the ratio of successful reported values in each test shall be more than 90% with a confidence level of 95%.

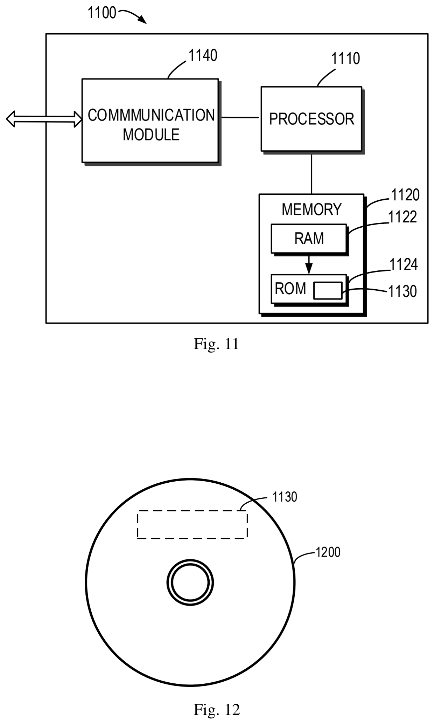

Fig. 11 is a simplified block diagram of a device 1100 that is suitable for implementing embodiments of the present disclosure. The device 1100 may be provided to implement the communication device, for example the first apparatus 110 or the second apparatus 120 as shown in Fig. 1. As shown, the device 1100 includes one or more processors 1110, one or more memories 1120 coupled to the processor 1110, and one or more communication modules 1140 coupled to the processor 1110.

The communication module 1140 is for bidirectional communications. The communication module 1140 has at least one antenna to facilitate communication. The communication interface may represent any interface that is necessary for communication with other network elements.

The processor 1110 may be of any type suitable to the local technical network and may include one or more of the following: general purpose computers, special purpose computers, microprocessors, digital signal processors (DSPs) and processors based on multicore processor architecture, as non-limiting examples. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a read only memory (ROM) 1124, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1122 and other volatile memories that will not last in the power-down duration.

A computer program 1130 includes computer executable instructions that are executed by the associated processor 1110. The program 1130 may be stored in the ROM 1124. The processor 1110 may perform any suitable actions and processing by loading the program 1130 into the RAM 1122.

The communication module 1140 is for bidirectional communications. The communication module 1140 has at least one antenna to facilitate communication. The communication interface may represent any interface that is necessary for communication with other network elements.

The embodiments of the present disclosure may be implemented by means of the program 1130 so that the device 1100 may perform any process of the disclosure as discussed with reference to Figs. 2 to 10. The embodiments of the present disclosure may also be implemented by hardware or by a combination of software and hardware.

In some embodiments, the program 1130 may be tangibly contained in a computer readable medium which may be included in the device 1100 (such as in the memory 1120) or other storage devices that are accessible by the device 1100. The device 1100 may load the program 1130 from the computer readable medium to the RAM 1122 for execution. The computer readable medium may include any types of tangible non-volatile storage, such as ROM, EPROM, a flash memory, a hard disk, CD, DVD, and the like. Fig. 12 shows an example of the computer readable medium 1200 in form of CD or DVD. The computer readable medium has the program 1130 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to Figs. 2-10. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
transfer, from a low power radio (LR) of the first apparatus to a main radio (MR) of the first apparatus, a measurement report comprising results of multiple low power wake-up signal (LP-WUS) radio resource management (RRM) measurements; and
transmit, from the MR of the first apparatus to a second apparatus, the measurement report.

2. The first apparatus of claim 1, wherein the first apparatus is further caused to:
estimate, by the LR of the first apparatus, the results of the multiple LP-WUS RRM measurements; and
store, by the LR of the first apparatus, the results of multiple LP-WUS RRM measurements.

3. The first apparatus of claim 2, wherein the first apparatus is caused to estimate the results of the multiple LP-WUS RRM measurements by:
receiving, from a second apparatus, LP-WUS data; and
estimating the results of the multiple measurements based on the LP-WUS data.

4. The first apparatus of claim 3, wherein the first apparatus is caused to estimate the results of the multiple measurements by:
decoding the LP-WUS data; and
calculating at least one measurement metric, wherein the at least one measurement metric comprises at least one of the following:
low power reference signal received power (LP-RSRP),
low power reference signal received quality (LP-RSRQ),
low power received signal strength indication (LP-RSSI), or
other metric indication.

5. The first apparatus of any of claims 1-4, wherein the first apparatus is caused to transfer the measurement report by:
based on determining that the measurement report is ready, waking up the MR of the first apparatus; and
transferring the measurement report.

6. The first apparatus of any of claims 1-5, wherein the first apparatus is further caused to:
transfer, between the LR of the first apparatus and the MR of the first apparatus, first information comprising at least one of the following:
a first test loop mode for a test of the LP-WUS RRM measurement,
the test of the LP-WUS RRM measurement,
a duration of the test,
averaging of multiple LP-WUS RRM measurements,
a radio resource control (RRC) state, or
a format of a measurement report.

7. The first apparatus of claim 6, wherein the first test loop mode supports a radio resource control (RRC) connected mode, an RRC idle mode, and an RRC inactive mode.

8. The first apparatus of any of claims 1-7, wherein at least one of the following:
the first apparatus comprises a user equipment; or
the second apparatus comprises a system simulator.

9. A method comprising:
transferring, from a low power radio (LR) of a first apparatus to a main radio (MR) of the first apparatus, a measurement report comprising results of multiple low power wake-up signal (LP-WUS) radio resource management (RRM) measurements; and
transmitting, from the MR of the first apparatus to a second apparatus, the measurement report.

10. The method of claim 9, wherein the method further comprises:
estimating, by the LR of the first apparatus, the results of the multiple LP-WUS RRM measurements; and
storing, by the LR of the first apparatus, the results of multiple LP-WUS RRM measurements.

11. The method of claim 10, wherein the method further comprises:
receiving, from a second apparatus, LP-WUS data; and
estimating the results of the multiple measurements based on the LP-WUS data.

12. The method of claim 11, wherein the method further comprises:
decoding the LP-WUS data; and
calculating at least one measurement metric, wherein the at least one measurement metric comprises at least one of the following:
low power reference signal received power (LP-RSRP),
low power reference signal received quality (LP-RSRQ),
low power received signal strength indication (LP-RSSI), or
other metric indication.

13. The method of any of claims 9-12, wherein the method further comprises:
based on determining that the measurement report is ready, waking up the MR of the first apparatus; and
transferring the measurement report.

14. The method of any of claims 9-13, wherein the method further comprises:
transferring, between the LR of the first apparatus and the MR of the first apparatus, first information comprising at least one of the following:
a first test loop mode for a test of the LP-WUS RRM measurement,
the test of the LP-WUS RRM measurement,
a duration of the test,
averaging of multiple LP-WUS RRM measurements,
a radio resource control (RRC) state, or
a format of a measurement report.

15. The method of claim 14, wherein the first test loop mode supports a radio resource control (RRC) connected mode, an RRC idle mode, and an RRC inactive mode.
